# EUROPEAN PATENT APPLICATION

(11) **EP 3 712 505 A1**
(43) Date of publication of application: **23.09.2020**
(21) Application number: 20162622.3
(22) Date of filing: 12.03.2020
(51) Int. Cl.: F23R 3/00, F23R 3/50

(54) **A COMBUSTOR TILE FOR A COMBUSTOR OF A GAS TURBINE ENGINE**

(30) Priority: 21.03.2019 GB 201903879
(71) Applicant: Rolls-Royce plc, London N1 9FX (GB)
(72) Inventor: Hicks, Robert, Derby, Derbyshire DE24 8BJ (GB)
(74) Representative: Rolls-Royce plc

(57) **Abstract**

An annular combustor (16) for a gas turbine engine (10) comprising an inner combustor wall (48) and an outer combustor wall (49). The inner and outer combustor walls (48, 49) each define an annulus and the inner combustor wall is radially inward of the outer combustor wall. The combustor comprises a primary zone (42) where the inner and outer combustor walls converge in a downstream direction, and a secondary zone (44) downstream of the primary zone (42). In the secondary zone, the inner and outer combustor walls are arranged to converge at a different rate to the primary zone, are non-convergent or are divergent in a downstream direction, such that a rate of change of radial width of the combustor is different in the primary zone to the secondary zone. A transition (66) is provided from the primary zone to the secondary zone. A plurality of combustor cooling tiles (60) lines the inner and outer combustor walls. One or more of the tiles (60) are arranged to extend from the primary zone to the secondary zone and across the transition from the primary zone to the secondary zone.

## Description

### Technical Field

The present disclosure relates to a combustor for a gas turbine engine, a combustor tile for a combustor of a gas turbine engine and/or a gas turbine engine.

### Background

Gas turbine engines typically include an annular combustor downstream of a compressor and upstream of a turbine. Typically, annular combustors have a primary zone and a secondary zone. The secondary zone may be referred to as a dilution zone. In use, a fuel injector injects fuel into the primary zone and vortices in the primary zone mix the injected fuel with air from the compressor. The fuel air mixture is ignited in the primary zone. For example, an igniter plug may be provided in the primary zone to create an electric spark to light the fuel-air mixture. The gases released from combustion are mixed with air in the dilution zone. The air may enter the dilution zone via holes or chutes provided in the wall of the combustor. Mixing the combustion gases with air helps to control emissions and lowers the temperature of the gases entering the turbine.

Combustion gases are at a higher temperature than the melting point of the combustor walls, so the walls need to be cooled. Such cooling may be achieved by lining the combustor with cooling tiles. Typically the tiles are coated with a thermal barrier coating, e.g. a ceramic coating, to withstand the high temperatures of the combustor. Different types of cooling tiles may be used, for example the cooling tiles may be effusion tiles or they may include an array of pedestals projecting towards the combustor wall for improving the convective heat transfer coefficient of the tile. For all types of cooling tiles, cooling air passes through holes in the combustor wall and impinges on the tile.

### Summary

According to a first aspect there is provided an annular combustor for a gas turbine engine. The combustor comprising an inner combustor wall and an outer combustor wall, the inner and outer combustor walls each define an annulus and the inner combustor wall is radially inward of the outer combustor wall. The combustor further comprising a primary zone, wherein within the primary zone the inner and outer combustor walls converge in a downstream direction and a secondary zone downstream of the primary zone, wherein in the secondary zone the inner and outer combustor walls are arranged to converge at a different rate to the primary zone, are non-convergent or are divergent in a downstream direction, such that a rate of change of radial width of the combustor is different in the primary zone to the secondary zone. The combustor comprises a transition from the primary zone to the secondary zone. The combustor further comprises a plurality of combustor cooling tiles lining the inner and outer combustor walls. One or more of the tiles are arranged to extend from the primary zone to the secondary zone and across the transition from the primary zone to the secondary zone.

The transition between the primary and secondary zone is coincident with a change in the rate of change of radial width of the combustor from the primary zone to the secondary zone.

The inner and outer combustor walls define the radial width of the combustor.

The tiles may have a first portion provided in the primary zone, a second portion provided in the secondary zone and a transition region. The first portion, second portion and transition region may be contiguous. The transition region of the tile may have a greater radius of curvature than the inner and/or outer walls of the combustor at the transition between the primary and secondary zone.

The transition from the first portion to the second portion of the tile is smoother (e.g. there is a less of an abrupt change in angle) than the transition of the inner and/or outer wall from the primary zone to the secondary zone.

A plurality of combustor cooling tiles may be adjacently arranged in a circumferential direction to define an annulus that extends from the primary zone to the secondary zone across the transition from the primary zone to the secondary zone.

Two or three tiles may be adjacently arranged in a circumferential direction and together define a full annulus that that extends from the primary zone to the secondary zone across the transition from the primary zone to the secondary zone of the inner and/or outer combustor wall.

Four tiles may be adjacently arranged in a circumferential direction and together define a full annulus that extends from the primary zone to the secondary zone across the transition from the primary zone to the secondary zone of the inner and/or outer combustor wall.

The tile extending across the primary zone, secondary zone, and transition may extend across the entire primary zone and/or secondary zone.

The combustor cooling tiles may be effusion tiles. Alternatively, the combustor cooling tiles may include pedestals extending from a surface of the tile towards the combustor wall lined by said tile.

At the transition there may be a step change in direction of the inner and/or outer combustor wall from the primary zone to the secondary zone. Alternatively, there may be a curved change in direction of the inner and/or outer combustor walls from the primary zone to the secondary zone.

The inner and outer combustor walls may be angled so as to reduce the radial width of the primary zone in a downstream direction.

Alternatively, the inner and/or outer combustor walls may be curved so as to reduce the radial width of the primary zone in a downstream direction.

The inner and outer combustor walls may be angled so as to increase the radial width of the secondary zone in a downstream direction. Alternatively, the inner and outer combustor walls may be curved so as to increase the radial width of the secondary zone in a downstream direction. Further alternatively, the inner and outer walls may be angled or curved such that the radial width of the secondary zone is constant or convergent in a downstream direction.

A fuel injector may be provided in the primary zone. An ignitor may be provided in the primary zone.

In an aspect there is provided a combustor for a gas turbine engine, the combustor comprising a primary zone; a secondary zone downstream of the primary zone; and a plurality of tiles lining the primary and secondary zone of the combustor. A series of tiles are arranged to extend axially such that a portion of each of the tiles in said series of tiles is in the primary zone and a portion of said same tiles is in the secondary zone.

The combustor may comprise an inner and outer combustor wall that converge at a first rate in the primary zone and are divergent, non-convergent or converge at a second rate in the secondary zone such that there is a change in axial direction of the walls at a transition between the primary and secondary zones. Each of the tiles of the series of tiles may be curved in a region coincident with the change in axial direction of the walls, the curve of the tiles having a greater radius than the change in direction of the walls.

In an aspect there is provided a combustor for a gas turbine engine, the combustor comprising inner and outer combustor walls defining a primary zone and a secondary zone, the inner and outer combustor walls in the primary zone being arranged at a first angle relative to each other, and the inner and outer combustor walls in the secondary zone being arranged at a second angle relative to each other, the second angle being different to the first angle. The combustor comprising a fuel injector provided in the primary zone. The combustor comprising an ignitor provided in the primary zone. The combustor comprising a plurality of air inlets provided in the secondary zone for injecting air into the combustor. The combustor comprising a plurality of combustor cooling tiles lining and connected to the combustor walls. One or more of the combustor cooling tiles extends from the primary zone to the secondary zone such that a portion of the tile is in the primary zone, a portion of the tile is in the secondary zone and the tile extends across a transition from the primary zone to the secondary zone.

The air inlets may be holes. The air inlets may be chutes.

Impingement holes may be provided in the inner and/or outer walls for impingement cooling of the tiles.

In an aspect there is provided a gas turbine engine comprising the combustor according to any one of the previous aspects.

In an aspect there is provided a combustor tile for a gas turbine engine, the combustor tile comprising a body having a first portion and a second portion, the first portion being contiguous with the second portion. The first portion is angled to the second portion by an angle between 185 and 210 degrees (e.g. 185 to 195).

A transition from the first portion to the second portion may be curved such that there is a gradual change in angle of the tile from the first portion to the second portion.

The combustor tile may be coated with a thermal barrier coating, e.g. a ceramic coating. The combustor tile may be metallic with a thermal barrier coating. Alternatively the combustor tile may be made from a ceramic. The combustor tile may be made from a ceramic composite.

In an aspect there is provided a combustor comprising one or more of the combustor tiles of the previous aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8.. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other. Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform. The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.
The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Drawings

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional side view of combustor equipment of a gas turbine engine;
Figure 5 is a perspective view of a combustor cooling tile;
Figure 6 is a sectional side view of alternative combustor equipment for a gas turbine engine;
Figure 7 is a sectional side view of further alternative combustor equipment for a gas turbine engine;
Figure 8 is a perspective view of a combustor cooling tile;
Figure 9 is a sectional side view of further alternative combustor equipment for a gas turbine engine; and
Figure 10 is a sectional side view of further alternative combustor equipment for a gas turbine engine.

### Detailed Description

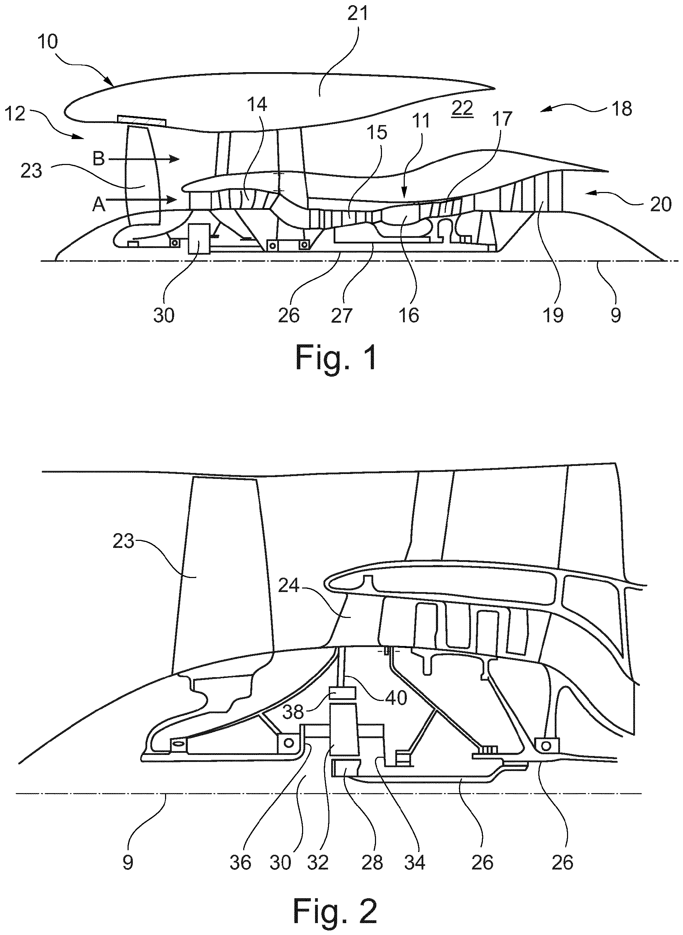

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

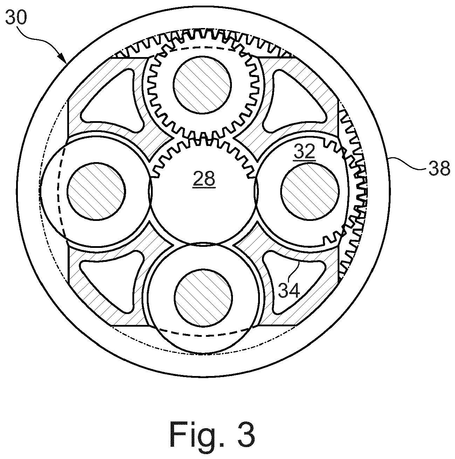

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

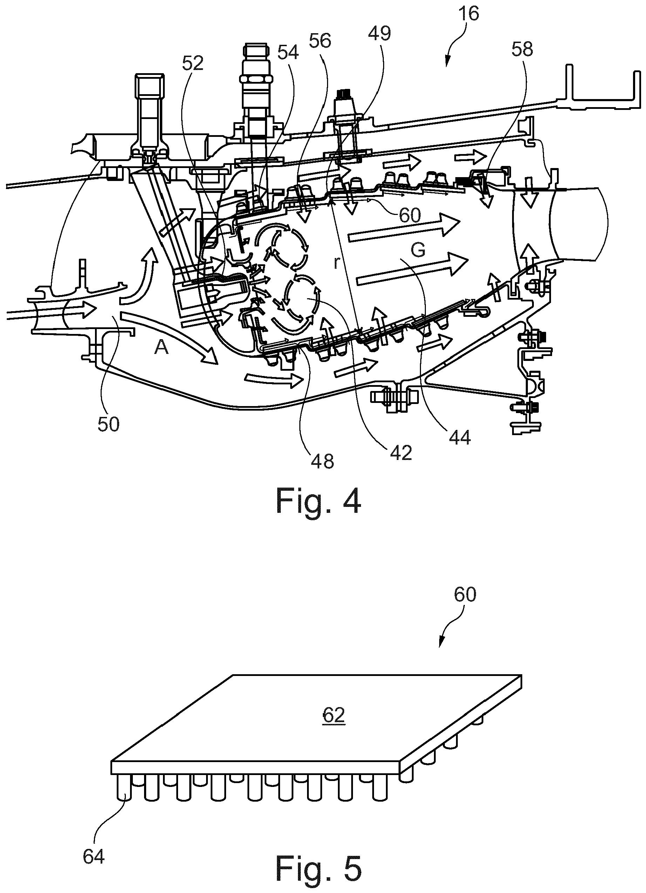

Referring to Figure 4, exemplary combustion equipment 16 is illustrated. The combustion equipment is an annular combustor. The annular combustor has a radially inner wall 48 and a radially outer wall 49. The walls 48, 49 of the combustor define a primary zone 42 and a diffusion zone 44. The diffusion zone is downstream of the primary zone. In the present example, the radially inner and the radially outer walls of the combustor are arranged such that the radial width r of the combustor diverges and then converges in downstream direction.

A fuel injector 52 is provided at an upstream end of the combustor and an ignitor 54 is provided to create a spark in the primary zone 42 of the combustor. A diffuser 50 is provided upstream of the combustor.

In use, flow A from the compressor is directed through the diffuser 50 to the combustor and around the combustor. The diffuser reduces the axial velocity of the air received from the compressor. The flow of air around the combustor contributes to cooling the combustor and to control of the combustion process, as will be described later. Air enters the combustor at an upstream end of the primary zone 42. Fuel is injected into the primary zone from the fuel injector 52. Flow within the primary zone is turbulent to encourage mixing of the fuel and air mixture and to reduce the axial velocity of the fuel air mixture. The ignitor 56 ignites the fuel air mixture in the primary zone. Air inlets 56 (only one labelled) are provided in the inner and outer radial walls of the combustor in the region of the diffusion zone. In the present example the air inlets are holes but in alternative examples chutes may be provided. Air flow from the compressor enters the combustor through the air inlets 58 into the combustion chamber to cool the combustion gases G and to control emissions.

The temperature of the combustion gases G is higher than the melting point of the walls 48, 49 of the combustor. As such, cooling of the walls of the combustor is required. One method of achieving wall cooling is to line the walls of the combustor with tiles 60 (only one labelled). In the present example, a conventional gas turbine engine is illustrated, and there are a plurality of tiles provided in the primary zone and the diffusion zone, and the tiles are axially adjacent one another in a transition between the primary zone and the diffusion zone, such that there is no single tile extending from the primary zone to the diffusion zone. The tiles 60 may be mounted to the walls using for example mechanical fasteners. The tiles 60 may be metallic and coated in a thermal barrier coating, for example a ceramic coating, or may be made from ceramic. Cooling holes are provided in the combustor walls and cooling air flows through these holes and impinges on the tiles. An example tile is shown in more detail in Figure 5.

With reference to Figure 5, the tile 60 includes a body 62 and a series of pedestals 64 protruding radially from the body. When mounted on the combustor wall, the pedestals are arranged to protrude towards the wall 48, 49 to which the tile is mounted. In use, cooling flow from the compressor flows through the wall 48, 49 of the combustor and impinges on the body 62 of the tile. The flow then flows through the pedestals before exiting the region of the tile. The pedestals increase convective cooling. As will be described later, an alternative cooling tile may not have pedestals and may be what is referred to in the art as an effusion tile.

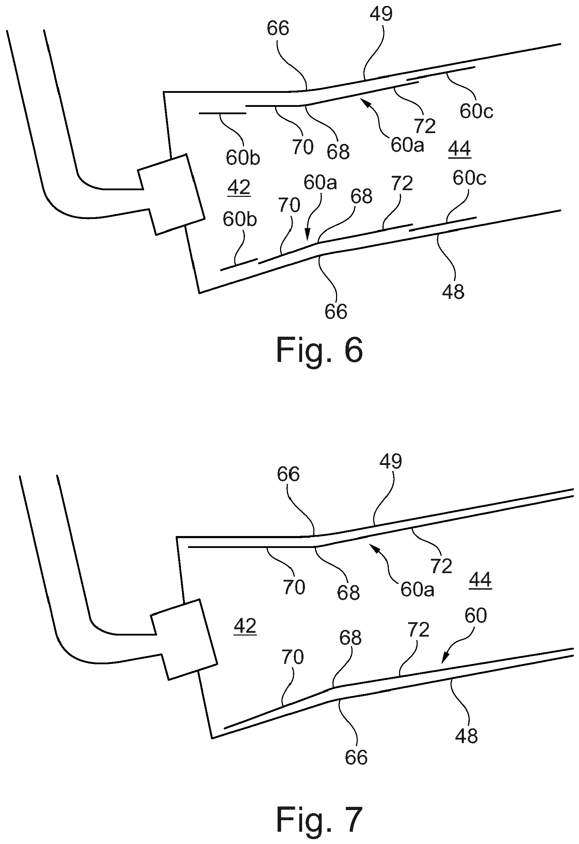

Referring now to Figure 6, the walls 48, 49 of the combustor may be arranged such that the radial width of the combustor decreases from an upstream end to a downstream end of the primary zone 42. That is the walls 48, 49 converge in a downstream direction. In the present example, the walls of the combustor in the primary zone are angled so as to reduce the radial width of the primary zone of the combustor in a downstream direction, but in alternative examples the walls may be curved to reduce the radial width of the primary zone. A secondary zone 44 is provided downstream of the primary zone. In the present example the secondary zone may be considered the diffusion zone. In the present example, the walls of the combustor in the secondary zone 44 are substantially parallel such that the radial width of the secondary zone is substantially constant. For example, the walls can be considered as non-convergent in the secondary zone. In the present example, the angle of the inner and outer walls changes by a step change at the transition 66. However, in alternative embodiments, the change in angle may be more gradual, e.g. the transition 66 may be curved to provide a gradual change in angle instead of being a step change.

A tile 60a is provided at the transition 66. The tile 60a extends from the primary zone 42, across the transition 66, to the secondary zone 44. A series of tiles are provided circumferentially adjacent to each other so as to define an annulus that extends from the primary zone to the secondary zone across the transition. The junctions between the tiles in the region of the transitions are all axially extending, i.e. there are no circumferentially extending junctions between tiles at the transition.

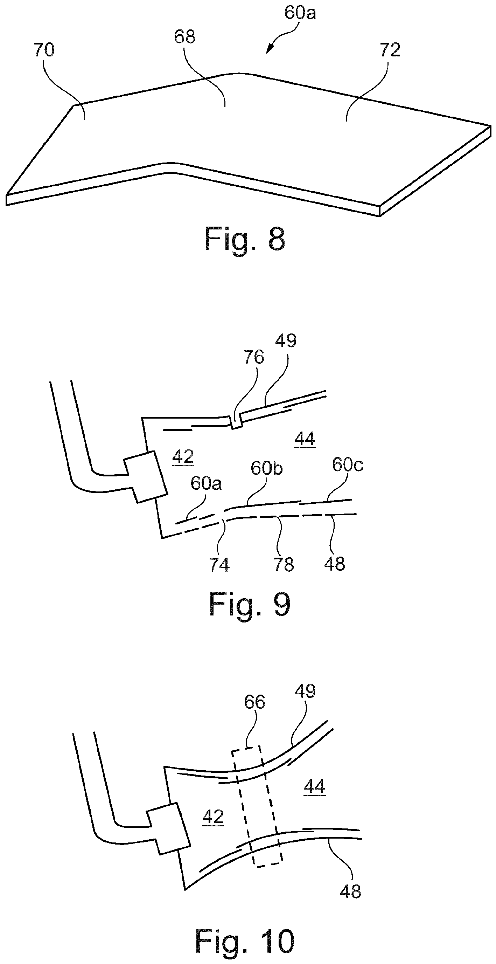

Referring to Figures 6 and 8, the tile 60a includes a first portion 70 provided in the primary zone and a second portion 72 provided in the secondary zone. A transition region 68 is provided between the first portion and the second portion. In the present example the tile is an effusion tile, but in alternative examples the tile may include pedestals. By way of example only, in the present example, the angle between the first portion and the second portion is between (and including) 185 and 210 degrees (e.g. 185 to 195). The angle is measured from the combustion gas washed side of the tile (i.e. the side of the tile exposed to the combustion gases).

The transition 66 in the walls 48, 49 of the combustor creates a kink which can be a location of high stress concentration. The tile 60a may be arranged such that the transition 68 between the first portion (i.e. from the primary zone) to the second portion (i.e. to the secondary zone) is a smoother transition than on the combustor walls. For example, instead of a step change there may be a curved transition as illustrated in Figure 8. Such a transition may be easier to manufacture on the tiles than on the combustor walls themselves.

The provision of a smooth transition 68 from the primary zone to the secondary zone reduces the risk of a high stress concentration at the transition. Further the provision of a single tile that extends from the primary zone to the secondary zone removes any possible cooling film disruption at the transition 66 of the combustor walls 48,49 which could otherwise be caused by a circumferentially extending joint between tiles at the transition. Removing the risk of cooling film disruption improves cooling of the combustor walls and reduces the risk of failure of the combustor walls.

Additional tiles 60b, 60c may be placed axially adjacent the tiles 60a. For example, a plurality of tiles forming an annulus may be provided entirely in the primary zone, a plurality of tiles forming an annulus may be provided entirely in the secondary zone, and the annulus of tiles that extend across the transition 66 of the combustor walls 48, 49 may be axially adjacent (and optionally overlapping) the tiles that are entirely in the primary zone and the tiles that are entirely within the secondary zone.

Referring to Figure 7, the tiles 60 that extend across the transition 66 of the combustor walls 48, 49 may have a first portion 70 that extends substantially the entire axial length of the primary zone and a second portion 72 that extends substantially the entire axial length of the secondary zone. The transition 68 between the first portion 70 and the second portion 72 may be more curved than the transition 66 of the combustor walls. In such an embodiment a plurality of tiles 60 may be arranged circumferentially adjacent to each other to define an annulus. In some embodiments only two tiles may be provided, the two tiles defining the entire annulus. Alternatively only three tiles may be provided, the three tiles defining the entire annulus, or further alternatively only four tiles may be provided, the four tiles defining the entire annulus.

Conventionally, the upstream end of the diffusion zone is defined as the position where bulk air enters the combustor for the control of combustion gas temperature. In the present examples, the bulk air enters the combustor in the region of the transition between the primary and secondary zone. Referring to Figure 9, in some examples the bulk air may enter the combustor through air inlets provided in the primary zone. In this example the air inlets are holes 74. These air inlets are provided upstream of the change in convergence/divergence of the combustor walls, i.e. upstream of the secondary zone. However, in other examples the bulk air inlets may alternatively or additionally be provided downstream of the change in convergence/divergence of the combustor walls, or in some examples may be provided in the transition region. In Figure 9, chutes 76 are example air inlets provided downstream of the change in convergence/divergence (or in other words change in axial direction) of the combustor walls. The bulk air inlets differ from the impingement holes 78, because the air from the impingement holes impinges on the tiles 60a, 60b, 60c, rather than entering the combustor to cool the combustor gases. In the present example, the impingement holes are smaller in diameter than the bulk air inlets.

In the described embodiments, the walls of the combustor have been angled to change the radial width of the combustor. However, referring to Figure 10, the walls may be curved to achieve the desired change in radial width of the combustor. In the example shown in Figure 10, the walls are convergent in the primary zone and divergent in the secondary zone. The walls 48, 49 of the combustor are curved at the transition 66 between the primary zone and the secondary zone so that there is a more gradual change in radial width of the combustor than with a step change.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. An annular combustor for a gas turbine engine, the combustor comprising:
an inner combustor wall and an outer combustor wall, the inner and outer combustor walls each define an annulus and the inner combustor wall is radially inward of the outer combustor wall;
a primary zone, wherein within the primary zone the inner and outer combustor walls converge in a downstream direction;
a secondary zone downstream of the primary zone, wherein in the secondary zone the inner and outer combustor walls are arranged to converge at a different rate to the primary zone, are non-convergent or are divergent in a downstream direction, such that a rate of change of radial width of the combustor is different in the primary zone to the secondary zone;
a transition from the primary zone to the secondary zone; and
a plurality of combustor cooling tiles lining the inner and outer combustor walls, wherein one or more of the tiles are arranged to extend from the primary zone to the secondary zone and across the transition from the primary zone to the secondary zone.

2. The annular combustor according to claim 1, wherein the tiles have a first portion provided in the primary zone, a second portion provided in the secondary zone and a transition region, the first portion, second portion and transition region being contiguous, and wherein the transition region of the tile has a greater radius of curvature than the inner and/or outer walls of the combustor at the transition between the primary and secondary zone.

3. The annular combustor according to claim 1 or 2, wherein a plurality of combustor cooling tiles are adjacently arranged in a circumferential direction to define an annulus that extends from the primary zone to the secondary zone across the transition from the primary zone to the secondary zone.

4. The annular combustor according to any one of the previous claims, wherein four tiles are adjacently arranged in a circumferential direction and together define a full annulus that extends from the primary zone to the secondary zone across the transition from the primary zone to the secondary zone of the inner and/or outer combustor wall.

5. The annular combustor according to any one of the previous claims, wherein the tile extending across the primary zone, secondary zone, and transition, extends across the entire primary zone and/or secondary zone.

6. The annular combustor according to any one of the previous claims, wherein the combustor cooling tiles are effusion tiles.

7. The annular combustor according to any one of the previous claims, wherein the inner and outer combustor walls are angled so as to reduce the radial width of the primary zone in a downstream direction.

8. The annular combustor according to any one of the previous claims, wherein the inner and outer combustor walls are angled so as to increase the radial width of the secondary zone in a downstream direction.

9. A gas turbine engine comprising the combustor according to any one of the previous claims.

10. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft;
a combustor provided downstream of the compressor and upstream of the turbine, the combustor being the combustor according to any one of claims 1 to 9.

11. The gas turbine engine according to claim 10, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

12. A combustor tile for a gas turbine engine, the combustor tile comprising:
a body having a first portion and a second portion, the first portion being contiguous with the second portion; and
wherein the first portion is angled to the second portion by an angle between 185 and 210 degrees.

13. The combustor tile according to claim 12, wherein the first portion is angled to the second portion by an angle between 185 and 195 degrees.

14. The combustor tile according to claim 12 or 13, wherein a transition from the first portion to the second portion is curved such that there is a gradual change in angle of the tile from the first portion to the second portion.
